# EUROPEAN PATENT SPECIFICATION

(11) **EP 2 910 461 B1**
(45) Date of publication and mention of the grant of the patent: **29.11.2017**
(21) Application number: 13884215.8
(22) Date of filing: 10.05.2013
(51) Int. Cl.: B62B 3/06, B62B 5/00, B62B 5/06

(54) **LIGHT AND SMALL INDUSTRIAL VEHICLE**
LEICHTES UND KLEINES NUTZFAHRZEUG
VÉHICULE INDUSTRIEL LÉGER ET COMPACT

(43) Date of publication of application: 26.08.2015
(73) Proprietor: Zhejiang Noblelift Equipment Joint Stock Co. Ltd., Huzhou, Zhejiang 313100 (CN)
(72) Inventor: HUETHER, Sebastian Alexander, Huzhou Zhejiang 313100 (CN); YE, Weiwei, Huzhou Zhejiang 313100 (CN); ZHOU, Xuejun, Huzhou Zhejiang 313100 (CN)
(74) Representative: Eisenführ Speiser
(86) International application number: PCT/CN2013/075429
(87) International publication number: WO 2014/179973

(56) References cited:
- EP-A2- 0 220 734
- WO-A1-2004/067350
- WO-A1-2008/130379
- CN-U- 201 566 776
- CN-U- 201 721 574
- CN-Y- 2 209 092
- CN-Y- 2 209 092
- CN-Y- 2 769 155
- DE-U1- 29 918 650
- US-A- 3 549 161
- US-A- 4 227 706

## Description

### Technical Field

The present invention relates to industrial devices, in particular to a light and small industrial vehicle.

### Background

The light and small industrial vehicles in prior art, such as the HAND LIFT TRUCK disclosed in an invention patent application published as CN103038121A, the HAND-OPERATED HYDRAULIC TRANSPORTATION VEHICLE disclosed in a utility model patent granted and published as CN2161599Y and the HAND-OPERATED HYDRAULIC CARRIER disclosed in a utility model patent granted and published as CN202499688U, can only be dragged by an operator. Therefore, it is hard to drag when carrying a heavy load or when passing through obstacles and up slopes.

DE 29918650 U1 discloses a locking mechanism for a mechanically driven pallet hand truck.

US 3,549,161 discloses an industrial vehicle according to the preamble of claim 1.

In order to overcome the aforementioned disadvantages, improvements are made for the above mentioned vehicles, such as the TROLLEY DEVICE WITH STEERING ROD disclosed in an invention patent granted and published as CN1745011B. The trolley device is provided with a force transmission device and a coupling for converting an up-down reciprocating movement of the steering rod into a driving movement of the steering wheels. The coupling is configured to have two control positions, a coupling position in which the steering wheels are completely not driven and a transmission position in which two driving forces are in opposite directions. Without the force transmission of the steering rod, the movement of the steering rod along the direction inverse to a set driving force transmission turning direction is free, and wheels can freely rotate along the driving force transmission direction. The coupling comprises an inner cylindrical member having an outward cylindrical surface. The perimeter of the surface has plane axial cuts, at which a roller holder is provided with rollers therein; the coupling further comprises an outer cylindrical member having an inward cylindrical surface. The roller holder driven forward in a first direction holds rollers such that the rollers can be wedged in between the cuts and the outer cylindrical member when movement is made along a direction, and the roller holder rotates along an opposite direction when transmission moves towards the opposite direction, and the roller holder holds the rollers in a middle position in which the rollers would not be wedged when a neutral position or a vacant position is required.

However, while such trolley device with steering rod can act to help the rotation of wheels by the rotation of the steering rod so as to make the activation of the trolley energy-saving, it is complex in structure and thus difficult to implement.

### Summary

The present invention aims to provide a light and small industrial vehicle that converts a rotation action of a handle into a rotation action of a driving wheel in a mode of fitting a racket wheel with a pawl so that an operator can drag or push a carrier in an energy-saving manner.

The above technical purpose of the present invention is implemented by providing a light and small industrial vehicle as defined in claim 1. Preferred embodiments are defined in the dependent claims. A light and small industrial vehicle comprises a driving wheel, a handle and a driving mechanism capable of converting the rotation action of the handle into a rotation action of a driving wheel; the driving mechanism consists of a racket wheel having teeth and capable of driving the driving wheel to rotate, a pawl capable of being meshed with the teeth, a pulling plate used for mounting the pawl and capable of serving as a follow-up object of the racket wheel when the pawl is meshed with the teeth, a pressing rod for converting the rotation action of the handle into a rotation action of the pulling plate and a triggering mechanism used for controlling the pawl to be separated from or meshed with the racket wheel.

By using a mode of fitting a racket wheel with a pawl, the rotation action of the handle is converted into a rotation action of the driving wheel so that an operator can drag or push a carrier in an energy-saving manner. The triggering mechanism comprises a positioning disc rotationally connected with the pulling plate by a rotating shaft, a positioning rod capable of fixing a stop block in a current rotating position, a pressing block capable of converting a rotation action of the rotating shaft into a separating or meshing action between the racket wheel and the pawl and a pedal plate relatively fixed to the positioning disc.

In prior art, in the invention patent granted and published as CN17745011B as described in the Background, the up-down reciprocating movement of the steering rod is converted into the driving movement of the steering wheel by controlling rollers in different positions by hand operations. Since the operator has to manipulate the steering rod and implement dragging and pulling actions by his hands at the same time, this solution has high requirements in hand operation flexibility, namely increasing the difficulty for operation of the device; however, the aforementioned solution of the present invention can generally reduce the difficulty for operation by using a foot action to realize the meshing and separation between the racket wheel and the pawl.

As preferred in the present invention, the pawl has a rotational connecting portion rotationally connected with the pulling plate and a meshing portion acting on the racket wheel; the pressing block has a triggering portion that acts on the meshing portion; and a connecting element is connected between the triggering portion and the meshing portion.

In the aforementioned configuration, the meshing portion is not coaxial with the rotational connecting portion, and is able to rotate around the axis of the rotational connecting portion, such that after the meshing portion is meshed with the racket wheel, the rotation action of the handle would not drive the driving wheel to rotate if the handle rotates along a direction from the meshing portion to the rotational connecting portion, but the rotation action of the handle would drive the driving wheel to rotate if the handle rotates along a direction from the rotational connecting portion to the meshing portion. Thus, the operator can continuously rotate the handle in a reciprocating manner to drive the carrier to move after the operator meshes the meshing portion with the racket wheel by the pedal plate. On the one hand, since the handle can be continuously rotated in a reciprocating manner to drive the carrier to move only through locating the positioning disc once, the difficulty of operation is further reduced; on the other hand, the pawl and the racket wheel are maintained in a meshed state at all times so that the carrier would not go backwards and slip while passing through obstacles, especially up slopes, thereby improving security and saving more energy for the operator.

As preferred in the present invention, the pawl has a rotational connecting portion rotationally connected with the pulling plate and meshing portions respectively located at two sides of the rotational connection portion for meshing with the racket wheel.

In the aforementioned configuration, the rotation action of the handle is converted into a rotation action of the driving wheel in two directions by meshing different meshing portions with the racket wheel in a direction perpendicular to the axis of the driving wheel.

As preferred in the present invention, the triggering mechanism comprises: a positioning disc that is rotationally connected with the pulling plate through a rotating shaft and has three bayonets, a positioning rod that is disposed on the pulling plate and can be locked in a corresponding bayonet to fix the positioning disc in the current rotating position, a pressing block that is relatively fixed to the rotating shaft and has triggering portions capable of acting on corresponding meshing portions of the same pawl so as to mesh the corresponding meshing portions to the racket wheel, and a pedal plate relatively fixed to the positioning disc.

As preferred in the present invention, a connecting element is connected between the corresponding triggering portion and the meshing portion corresponding to the triggering portion.

The connecting element is preferably an elastic member, such as a spring.

As preferred in the present invention, the meshing portions of the same pawl are axially staggered; two racket wheels correspond to the same pawl, and are axially distributed side by side. Furthermore, the teeth of one of the two racket wheels are oriented inversely to those of the other one.

On the one hand, it is beneficial for improving the engagement between the meshing portion and corresponding racket wheel and for improving the conversion rate for converting the power produced by rotating the handle into a power rotating the driving wheel; on the other hand, rotating the handle in a direction from the meshing portion to the rotational connecting portion saves more energy and reduces the friction between the pawl and the teeth as much as possible.

As preferred in the present invention, each meshing portion is provided with a rotating end for rotationally connecting the meshing portion to the pulling plate; the rotational connecting portion consists of two rotating ends of the same pawl.

As preferred in the present invention, two ends of the pressing rod are rotationally connected with the handle and the pulling plate respectively.

As preferred in the present invention, the light and small industrial vehicle further comprises a chassis which is provided with an oil cylinder and an oil pump thereon; the handle and the oil cylinder are disposed in a relatively rotating manner, and the handle acts on the oil pump to control the movement of an oil plug of the oil cylinder; the piston rod of the oil cylinder is provided with a top plate at the upper end thereof; the top plate is fixedly connected with a frame flexibly connected with the chassis; the frame is provided with supporting wheels on the lower part thereof; a wheel spindle relatively fixed on the oil cylinder is disposed under the chassis; driving wheels are located at two sides of the wheel spindle; ball bearings are disposed between the driving wheels and the wheel spindle; respective sides of two driving wheels that face towards each other are fixedly provided with two racket wheels that are axially distributed side by side with the teeth oriented inversely; the two racket wheels are respectively the first racket wheel and the second racket wheel; the wheel spindle is further sleeved with two pulling plates; a rotating shaft is rotationally connected between the two pulling plates; the rotating shaft is fixedly provided thereon with a positioning disc having three bayonets; a positioning rod that can be locked in a corresponding bayonet is further disposed between the two pulling plates; each of the pulling plates is provided thereon with a notch used for mounting the positioning rod; an elastic element is provided between the positioning rod and the rotating shaft and is used such that the positioning rod is able to shift along a direction perpendicular to the axial direction of the rotating shaft when reciprocating between different bayonets due to a resistant force of the positioning disc, so as to lock the positioning rod into the corresponding bayonet; an upper pawl and a lower pawl respectively corresponding to the first racket wheel and the second racket wheel are connected in a coaxial rotating manner on each pulling plate; each of the upper and lower pawls is provided with a rotational connecting portion rotationally connected with the pulling plate and a meshing portion used for meshing with the corresponding racket wheel; two ends of the rotating shaft are each fixedly provided with an upper pressing block and a lower pressing block respectively corresponding to the upper pawl or the lower pawl; each pressing block has a triggering portion acting on the corresponding pawl; a connecting element is disposed between a respective triggering portion and a respective meshing portion; the positioning disc is further fixedly provided with a pedal plate thereon which is convenient for the operator to rotate the positioning disc; and two ends of a pressing rod are rotationally connected to the handle and the pulling plate respectively.

In conclusion, the present invention has the following beneficial effects: the present invention has a simple structure and uses a mode of meshing the racket wheel and the pawl to convert the rotation action of the handle into the rotation action of the driving wheel, so it is beneficial for reducing power consumption in the action conversion process; furthermore, the present invention can realize the continuous rotation of the driving wheel along the forward direction through the continuous reciprocating rotation of the handle only through locating the positioning disc once, thereby reducing the difficulty of operation and further improving the convenience of operation since the positioning of the positioning disc can be realized by a foot; also, the operator does not need to drag the carrier, resulting in energy-saving carrying; moreover, the utility model would not slip while passing through obstacles, especially up slopes, improving the security of the carrying process.

### Brief description of the drawings

Fig. 1 is a schematic diagram of the structure of embodiment 1;
Fig. 2 is a schematic diagram of a driving mechanism of embodiment 1;
Fig. 3 is a side view of the driving mechanism of embodiment 1;
Fig. 4 is a schematic diagram of the structure of a positioning disc in embodiment 1; and
Fig. 5 is a schematic diagram of the structure of a pulling plate in embodiment 1.

In the drawings: 4, chassis; 41, oil cylinder; 42, oil pump; 2, handle; 411, piston rod; 81, top plate; 8, frame; 82, supporting wheel; 11, wheel spindle; 1, driving wheel; 12, ball bearing; 3111, teeth; 311, the first racket wheel; 312, the second racket wheel; 33, pulling plate; 34, pressing rod; 3511, rotating shaft; 351, positioning disc; 3512, bayonet; 331, notch; 352, positioning rod; 3521, elastic element; 321, upper pawl; 322, lower pawl; 3212, meshing portion; 3211, rotational connecting portion; 3531, upper pressing block; 3532, lower pressing block; 35311, triggering portion; 355, connecting element; 354, pedal plate.

### Detailed description

The present invention is illustrated in greater detail in conjunction with following drawings.

The detailed embodiments are only explanatory for the present invention and are not intended to limit the present invention. Persons skilled in the art may make modifications without inventive contributions to these embodiments as desired after reading this specification, and these modifications are protected by patent law given that the modifications are within the scope of the claims.

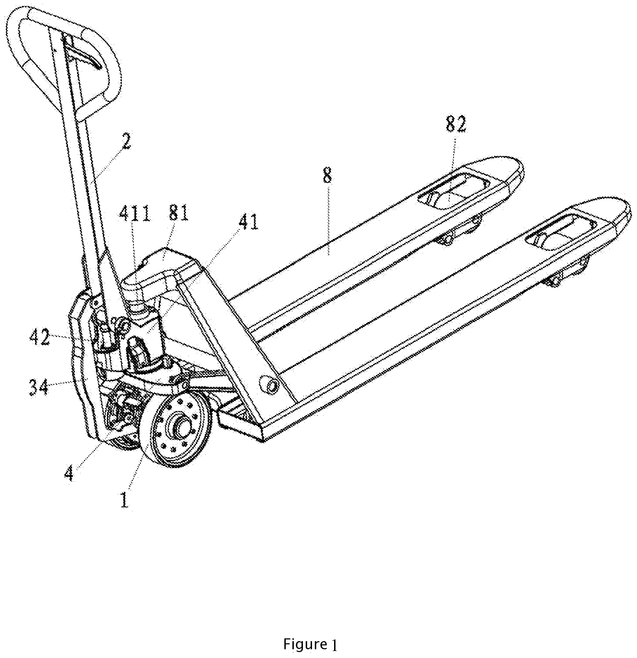

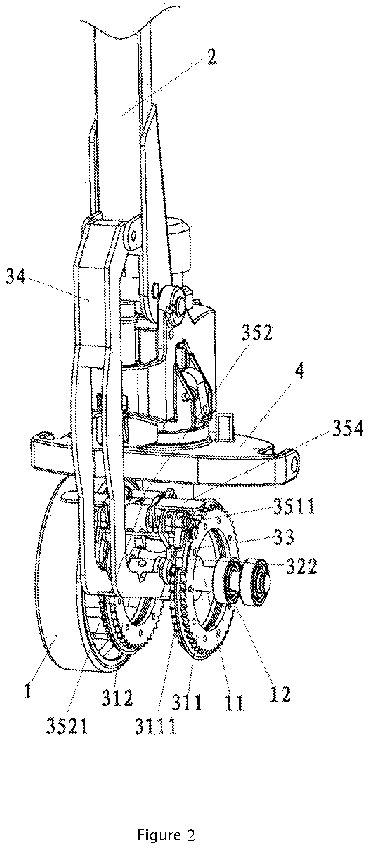

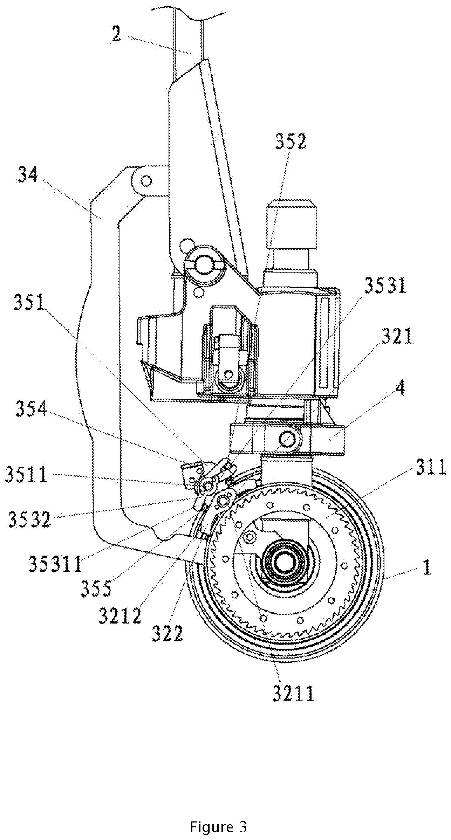

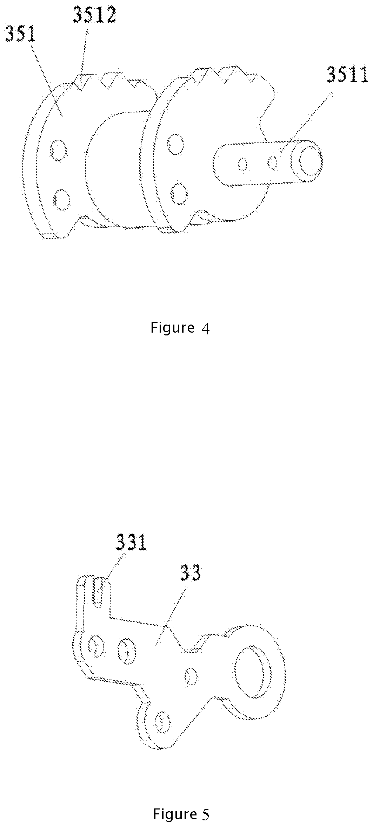

Embodiment 1: as shown in Figs. 1-5, a light and small industrial vehicle comprises a chassis 4 which is provided with an oil cylinder 41 and an oil pump 42 thereon; one end of a handle 2 is hinged with the oil cylinder 41; the handle 2 acts on the oil pump 42 such that the oil cylinder 41 makes piston movement via the reciprocating rotation of the handle 2; the oil pump 42 is further provided with a pushing fork thereon; the rotation of the handle 2 can activate the oil pump 42 when the pushing fork is in a corresponding position, while the rotation of the handle 2 would not activate the oil pump 42 when the pushing fork is in another position; the pushing fork is not shown in the drawings; the piston rod 411 of the oil cylinder 41 is provided with a top plate 81 at the upper end thereof; the top plate 81 is fixedly connected with a frame 8 which is flexibly connected with a chassis 4; and the frame 8 is provided with supporting wheels 82 on the lower part thereof.

A wheel spindle 11 relatively fixed on the oil cylinder 41 is disposed under the chassis 4; driving wheels 1 are respectively disposed at two sides of the wheel spindle 11; ball bearings 12 are disposed between the driving wheels 1 and the wheel spindle 11; respective sides of two driving wheels 1 that face towards each other are fixedly provided with two racket wheels that are axially distributed side by side with the teeth 3111 oriented inversely; the two racket wheels are respectively the first racket wheel 311 and the second racket wheel 312; the wheel spindle 11 is further sleeved with two pulling plates 33 thereon between two innermost racket wheels; the two pulling plates 33 are respectively near corresponding innermost racket wheels; a rotating shaft 3511 is rotationally connected between the two pulling plates 33; the rotating shaft 3511 is fixedly provided thereon with a positioning disc 351 having three bayonets 3512; each of the two pulling plates 33 is provided with a notch 331; a positioning rod 352 that can be locked in a corresponding bayonet 3512 is further inserted between the two notches 331; an elastic element 3521 is provided between the positioning rod 352 and the rotating shaft 3511 and is used such that the positioning rod 352 is able to shift along a direction perpendicular to the axial direction of the rotating shaft 3511 when reciprocating between different bayonets 3512 due to a resistant force of the positioning disc 351, so as to lock the positioning rod 352 into the corresponding bayonet 3512; this elastic element 3521 may be a spring; an upper pawl 321 and a lower pawl 322 respectively corresponding to the first racket wheel 311 and the second racket wheel 312 are connected in a coaxial rotating manner on each pulling plate 33; each of the upper and lower pawls is provided with a rotating end rotationally connected with the pulling plate and a meshing portion 3212 used for meshing with the corresponding racket wheel; each rotating end may be considered as a rotational connecting portion 3211, however, it may also be considered that the rotational connecting portion 3211 comprises two rotating ends at the same side since the rotating ends of the upper and lower pawls at the same side are coaxial; two ends of the rotating shaft 3511 are each fixedly provided with an upper pressing block 3531 and a lower pressing block 3532 corresponding to the upper pawl 321 or the lower pawl 322, respectively; each pressing block has a triggering portion 35311 which acts on the corresponding pawl due to the displacement in a direction perpendicular to the axial direction of the rotating shaft 3511 generated by the rotation of the rotating shaft 3511; a connecting element 355 is disposed between a respective triggering portion 35311 and a respective meshing portion 3212; the connecting element 355 is preferably a spring; the positioning disc 351 is further fixedly provided with a pedal plate 354 thereon which is convenient for the operator to rotate the positioning disc 351; two ends of a pressing rod 34 are rotationally connected to the handle 2 and the pulling plate 33 respectively; the positioning disc 351, the positioning rod 352, the pressing blocks and the pedal plate 354 constitute a triggering mechanism; the triggering mechanism, the racket wheels, the pawls, the pulling plates 33 and the pressing rod 34 constitute a driving mechanism for converting the rotation action of the handle 2 into the rotation action of the driving wheels 1.

Embodiment 2: the differences between embodiments 1 and 2 are that respective sides of two driving wheels 1 that face towards each other are each fixedly provided with only one racket wheel; each of the teeth on the racket wheel is oriented coincidently with or parallel to the connection line from the vertex of the tooth to the center of the racket wheel; and the upper pawl 321 and the lower pawl 322 on each pulling plate 33 can both be meshed with the racket wheel.

Embodiment 3: the differences between embodiments 1 and 3 are that respective sides of two driving wheels 1 which face towards each other are each fixedly provided with only one racket wheel; and each pulling plate 33 is only provided thereon with one pawl capable of being meshed with the racket wheel.

Meanwhile, by adaptively changing the structure or shape of the pawl in the present embodiment, the rotations of the driving wheels 1 in clockwise and anticlockwise directions can be respectively realized by the up-down rotation of the handle 2; and only two bayonets 3512 for locating the positioning rod 352 are required on the positioning disc 351 of the present embodiment, one for separating the pawl from the racket wheel, and the other one for meshing the pawl with the racket wheel.

## Claims

1. A light and small industrial vehicle, comprising a driving wheel (1), a handle (2) and a driving mechanism (3) capable of converting a rotation action of the handle (2) into a rotation action of the driving wheel (1), wherein the driving mechanism (3) comprises a racket wheel (311, 312) having teeth (3111) and capable of driving the driving wheel (1) to rotate, a pawl (321, 322) capable of being meshed with the teeth (3111), a pulling plate (33) used for mounting the pawl (321, 322) and capable of serving as a follow-up object of the racket wheel (311, 312) when the pawl (321, 322) is meshed with the teeth (3111), a pressing rod (34) for converting the rotation action of the handle (2) into a rotation action of the pulling plate (33) and a triggering mechanism (351 - 354) used for controlling the pawl (321, 322) to be separated from or meshed with the racket wheel (311, 312), **characterized in that** the triggering mechanism (351 - 354) comprises a positioning disc (351) rotationally connected with the pulling plate (33) by a rotating shaft (3511), a positioning rod (352) capable of fixing the positioning disc (351) in a current rotating position, a pressing block (353) capable of converting a rotation action of the rotating shaft (3511) into the separating or meshing action between the pawl (321, 322) and the racket wheel (311, 312), and a pedal plate (354) relatively fixed with the positioning disc (351).

2. The light and small industrial vehicle according to Claim 1, **characterized in that** the pawl (321, 322) has a rotational connecting portion (3211) rotationally connected with the pulling plate (33) and a meshing portion (3212) acting on the racket wheel (311, 312); the pressing block has a triggering portion (35311) acting on the meshing portion (3212); and a connecting element (355) is connected between the triggering portion (35311) and the meshing portion (3212).

3. The light and small industrial vehicle according to Claim 1, **characterized in that** the pawl (321, 322)has a rotational connecting portion (3211) rotationally connected with the pulling plate (33) and meshing portions (3212) respectively located at two sides of the rotational connecting portion (3211) for meshing with the racket wheel (311, 312).

4. The light and small industrial vehicle according to Claim 3, **characterized in that** the triggering mechanism (351 - 354) comprises: the positioning disc (351) that is rotationally connected with the pulling plate (33) by the rotating shaft (3511) and has three bayonets (3512), a positioning rod (352) that is disposed on the pulling plate (33) and can be locked in a corresponding bayonet (3512) to fix the positioning disc (351) in the current rotating position, a pressing block that is relatively fixed to the rotating shaft (3511) and has triggering portions (35311) capable of respectively acting on corresponding meshing portions (3212) of the same pawl (321, 322) so as to mesh the corresponding meshing portions (3212) with the racket wheel (311, 312), and a pedal plate (354) relatively fixed to the positioning disc (351).

5. The light and small industrial vehicle according to Claim 4, **characterized in that** a connecting element (355) is connected between the respective triggering portion (35311) and the meshing portion (3212) corresponding to the triggering portion (35311).

6. The light and small industrial vehicle according to Claim 3, **characterized in that** the meshing portions (3212) of the same pawl (321, 322) are staggered axially; two racket wheels (311, 312) correspond to the same racket pawl (321, 322); the two racket wheels (311, 312) are axially distributed side by side; and the teeth (3111) of one of the two racket wheels (311, 312) are oriented inversely to the teeth (3111) of the other one.

7. The light and small industrial vehicle according to Claim 3, **characterized in that** each meshing portion (3212) is provided with a rotating end (32111) rotationally connecting the meshing portion (3212) to the pulling plate (33); and the rotational connecting portion (3211) consists of the two rotating ends (32111) of the same pawl (321, 322).

8. The light and small industrial vehicle according to Claim 1, **characterized in that** two ends of the pressing rod (34) are rotationally connected with the handle (2) and the pulling plate (33) respectively.

9. The light and small industrial vehicle according to Claim 1, **characterized in that** the light and small industrial vehicle further comprises a chassis (4), which is provided with an oil cylinder (41) and an oil pump (42) thereon; the handle (2) and the oil cylinder (41) are disposed in a relatively rotating manner, and the handle (2) acts on the oil pump (42) to control the movement of an oil plug of the oil cylinder (41); a piston rod (411) of the oil cylinder (41) is provided with a top plate (81) at the upper end thereof; the top plate (81) is fixedly connected with a frame (8) flexibly connected with the chassis (4); the frame (8) is provided with supporting wheels (82) on the lower part thereof; a wheel spindle (11) relatively fixed on the oil cylinder (41) is disposed under the chassis (4); driving wheels (1) are located at two sides of the wheel spindle (11); ball bearings (12) are disposed between the driving wheels (1) and the wheel spindle (11); respective sides of the two driving wheels (1) that face towards each other are fixedly provided with two racket wheels (311, 312) that are axially distributed side by side with the teeth (3111) oriented inversely; the two racket wheels (311, 312) are respectively a first racket wheel (311) and a second racket wheel (312); the wheel spindle (11) is further sleeved with two pulling plates (33) thereon; the rotating shaft (3511) is rotationally connected between the two pulling plates (33); the rotating shaft (3511) is fixedly provided thereon with the positioning disc (351) having three bayonets (3512); the positioning rod (352) that can be locked in a corresponding bayonet (3512) is further disposed between the two pulling plates (33); each of the pulling plates (33) is provided thereon with a notch (331) used for mounting the positioning rod (352); an elastic element (3521) is provided between the positioning rod (352) and the rotating shaft (3511) and is used such that the positioning rod (352) is able to shift along a direction perpendicular to the axial direction of the rotating shaft (3511) when reciprocating between different bayonets (3512) due to a resistant force of the positioning disc (351), so as to lock the positioning rod (352) into the corresponding bayonet (3512); an upper pawl (321) and a lower pawl (322) respectively corresponding to the first racket wheel (311) and the second racket wheel (312) are connected in a coaxial rotating manner on each pulling plate (33); each of the upper and lower pawls (321, 322) is provided with a rotational connecting portion (3211) rotationally connected with the pulling plate and a meshing portion (3212) used for meshing with the corresponding racket wheel (311, 312); two ends of the rotating shaft (3511) are each fixedly provided with an upper pressing block (3531) and a lower pressing block (3532) respectively corresponding to the upper pawl (321) or the lower pawl (322); each pressing block has a triggering portion (35311) acting on the corresponding pawl (321, 322); a connecting element (355) is disposed between a respective triggering portion (35311) and a respective meshing portion (3212); the positioning disc (351) is further fixedly provided with the pedal plate (354) thereon which is convenient for the operator to rotate the positioning disc (351); and two ends of the pressing rod (34) are rotationally connected to the handle (2) and the pulling plate (33) respectively.

## Patentansprüche

1. Ein leichtes und kleines Nutzfahrzeug, aufweisend ein Antriebsrad (1), einen Griff (2) und einen Antriebsmechanismus (3), der imstande ist, eine Drehbewegung der Handhabe (2) in eine Drehbewegung des Antriebsrades (1) umzuwandeln, wobei der Antriebsmechanismus (3) ein Sperrrad (311, 312) mit Zähnen (3111) aufweist, welches das Antriebsrad (1) in eine Drehung versetzen kann, eine Sperrklinke (321, 322), die mit den Zähnen (3111) in Eingriff bringbar ist, eine zum Montieren der Sperrklinke (321, 322) verwendete Ziehplatte (33), die als Nachlaufobjekt des Sperrrades (311, 312) dienen kann, wenn die Sperrklinke (321, 322) mit den Zähnen (3111) in Eingriff steht, eine Druckstange (34) zum Umwandeln der Drehbewegung der Handhabe (2) in eine Drehbewegung der Ziehplatte (33), und einen Auslösemechanismus (351 - 354), der zum Steuern der Sperrklinke (321, 322) verwendet wird, um diese außer Eingriff oder in Eingriff mit dem Sperrrad (311, 312) zu bringen,
**dadurch gekennzeichnet, dass** der Auslösemechanismus (351 - 354) eine Positionierscheibe (351), die mittels einer Drehwelle (3511) drehbar mit der Ziehplatte (33) verbunden ist, einen Positionierstab (352), mit dem die Positionierscheibe (351) in einer aktuellen Drehstellung fixiert werden kann, einen Pressblock (353), der eine Drehbewegung der Drehwelle (3511) in den Trenn- oder Eingriffsvorgang zwischen der Sperrklinke (321, 322) und dem Sperrrad (311, 312) umwandeln kann, und eine Pedalplatte (354) aufweist, welche relativ zu der Positionierscheibe (351) fixiert ist.

2. Das leichte und kleine Nutzfahrzeug nach Anspruch 1, **dadurch gekennzeichnet, dass** die Sperrklinke (321, 322) einen Drehverbindungsabschnitt (3211) aufweist, der drehbar mit der Ziehplatte (33) verbunden ist, und einen Eingriffsabschnitt (3212) aufweist, der auf das Sperrrad (311, 312) einwirkt; wobei der Pressblock einen Auslöseabschnitt (35311) aufweist, der auf den Eingriffsabschnitt (3212) einwirkt; und ein Verbindungselement (355) ist zwischen dem Auslöseabschnitt (35311) und dem Eingriffsabschnitt (3212) angeschlossen.

3. Das leichte und kleine Nutzfahrzeug nach Anspruch 1, **dadurch gekennzeichnet, dass** die Sperrklinke (321, 322) einen Drehverbindungsabschnitt (3211) aufweist, der drehbar mit der Ziehplatte (33) und jeweils an zwei Seiten des Drehverbindungsabschnittes (3211) zum Ineingriffbringen mit dem Sperrrad (311, 312) angeordneten Eingriffsabschnitten (3212) verbunden ist.

4. Das leichte und kleine Nutzfahrzeug nach Anspruch 3, **dadurch gekennzeichnet, dass** der Auslösemechanismus (351 - 354) aufweist:
die Positionierscheibe (351), die über die Drehwelle (3511) drehbar mit der Ziehplatte (33) verbunden ist und drei Bajonette (3512) aufweist,
den Positionierstab (352), der an der Ziehplatte (33) angeordnet ist und in einem korrespondierenden Bajonett (3512) verriegelt werden kann, um die Positionsscheibe (351) in der aktuellen Drehstellung zu fixieren,
der Pressblock, der relativ zu der Drehwelle (3511) fixiert ist und Auslöseabschnitte (35311) aufweist, die jeweils auf korrespondierende Eingriffsabschnitte (3212) derselben Sperrklinke (321, 322) derart einwirken können, dass die korrespondierenden Eingriffsabschnitte (3212) mit dem Sperrrad (311,312) ineinander eingreifen und
die Pedalplatte (354), die relativ zur Positionierscheibe (351) befestigt ist.

5. Das leichte und kleine Nutzfahrzeug nach Anspruch 4, **dadurch gekennzeichnet, dass** ein Verbindungselement (355) zwischen einem jeweiligen Auslöseabschnitt (35311) und dem mit dem Auslöseabschnitt (35311) korrespondieren Eingriffsabschnitt (3212) angeschlossen ist.

6. Das leichte und kleine Nutzfahrzeug nach Anspruch 3, **dadurch gekennzeichnet, dass** die Eingriffsabschnitte (3212) derselben Sperrklinke (321, 322) axial versetzt sind; zwei Schieberäder (311, 312) mit derselben Sperrklinke (321, 322) korrespondieren, wobei die zwei Schieberäder (311, 312) Seite an Seite axial verteilt sind, und die Zähne (3111) eines der beiden Schieberäder (311, 312) invers zu den Zähnen (3111) des jeweils anderen Rades ausgerichtet sind.

7. Das leichte und kleine Nutzfahrzeug nach Anspruch 3, **dadurch gekennzeichnet, dass** jeder Eingriffsabschnitt (3212) mit einem drehbaren Ende (32111) versehen ist, das den Eingriffsabschnitt (3212) drehbar mit der Ziehplatte (33) verbindet; und der Drehverbindungsabschnitt (3211) aus zwei Drehenden (32111) derselben Sperrklinke (321, 322) besteht.

8. Das leichte und kleine Nutzfahrzeug nach Anspruch 1, **dadurch gekennzeichnet, dass** zwei Enden des Druckstabes (34) jeweils drehbar mit der Handhabe (2) und der Ziehplatte (33) verbunden sind.

9. Das leichte und kleine Nutzfahrzeug nach Anspruch 1, **dadurch gekennzeichnet, dass** das leichte und kleine Nutzfahrzeug ferner ein Chassis (4) aufweist, das mit einem Ölzylinder (41) und einer Ölpumpe (42) daran versehen ist, wobei die Handhabe (2) und der Ölzylinder (41) relativ drehbar angeordnet sind, und die Handhabe (2) auf die Ölpumpe (42) einwirkt, um die Bewegung eines Ölstopfens des Ölzylinders (41) zu steuern; wobei eine Kolbenstange (411) des Ölzylinders (41) mit einer oberen Platte (81) an ihrem oberen Ende versehen ist, wobei die obere Platte (81) fest mit einem Rahmen (8) verbunden ist, der wiederum flexibel mit dem Chassis (4) verbunden ist, wobei der Rahmen (8) mit Stützrädern (82) an seinem unteren Teil versehen ist; eine Radspindel (11), die relativ zu dem Ölzylinder (41) befestigt und unter dem Chassis (4) angeordnet ist; wobei Antriebsräder (1) an zwei Seiten der Radspindel (11) angeordnet sind; Kugellager (12), die zwischen den Antriebsrädern (1) und der Radspindel (11) angeordnet sind; wobei die jeweiligen Seiten der zwei Antriebsräder (1), die einander zugewandt sind, fest mit zwei Schieberädern (311, 312) versehen sind, die Seite an Seite mit ihren umgekehrt ausgerichteten Zähnen (3111) axial verteilt sind, wobei die zwei Schieberäder (311, 312) jeweils
ein erstes Sperrrad (311) und
ein zweites Sperrrad (312) ausbilden, wobei die Radspindel (11) ferner mit zwei Ziehplatten (33) daran eingehüllt ist,
wobei die Drehwelle (3511) drehbar zwischen den zwei Ziehplatten (33) angeschlossen ist, wobei die Drehwelle (3511) mit der mit drei Bajonetten (3512) versehenen Positionierscheibe (351) fest daran angeordnet ist;;
wobei der Positionierstab (352), der in einem korrespondierenden Bajonett (3512) verriegelt werden kann, ferner zwischen den zwei Ziehplatten (33) angeordnet ist, wobei jede der Ziehplatten (33) mit einer Kerbe (331) daran versehen ist, die zum Montieren des Positionierstabes (352) verwendet wird; wobei ein elastisches Element (3521) zwischen dem Positionierstab (352) und der Drehwelle (3511) vorgesehen ist und derart verwendet wird, dass der Positionierstab (352) in der Lage ist, sich entlang einer Richtung senkrecht zur axialen Richtung der Drehwelle (3511) zu verschieben, wenn sich diese zwischen einer Vielzahl von Bajonetten (3512) aufgrund einer Widerstandskraft der Positionierscheibe (351) hin und her bewegt, um den Positionierstab (352) in dem entsprechenden Bajonett (3512) zu arretieren; wobei eine obere Sperrklinke (321) und eine untere Sperrklinke (322), die jeweils mit dem ersten Sperrrad (311) und dem zweiten Sperrrad (312) korrespondieren, koaxial drehbar an jeder Ziehplatte (33) angeschlossen sind, wobei jede der oberen und unteren Sperrklinken (321, 322) mit einem Drehverbindungsabschnitt (3211) versehen ist, der drehbar mit der Ziehplatte und einem Eingriffsabschnitt (3212) verbunden ist, die für ein Ineinandergreifen mit dem korrespondierenden Sperrrad (311, 312) verwendet wird; wobei zwei Enden der Drehwelle (3511) jeweils mit einem oberen Pressblock (3531) und einem unteren Pressblock (3532) fest verbunden sind, die jeweils mit der oberen Sperrklinke (321) oder der unteren Sperrklinke (322) korrespondieren, wobei jeder Pressblock einen Auslöseabschnitt (35311) aufweist, der auf eine korrespondierende Sperrklinke (321, 322) einwirkt; wobei ein Verbindungselement (355) zwischen einem jeweiligen Auslöseabschnitt (35311) und einem jeweiligen Eingriffsabschnitt (3212) angeordnet ist; wobei die Positionierscheibe (351) ferner fest mit der Pedalplatte (354) versehen ist, welche es dem Bediener erleichtert, die Positionierscheibe (351) zu drehen; und wobei zwei Enden des Pressstabes (34) drehbar mit der Handhabe (2) bzw. der Ziehplatte (33) verbunden sind.

## Revendications

1. Véhicule industriel léger et compact, comprenant une roue d'entraînement (1), un guidon (2) et un mécanisme d'entraînement (3) capable de convertir une action de rotation du guidon (2) en une action de rotation de la roue d'entraînement (1), dans lequel le mécanisme d'entraînement (3) comprend une roue à rochet (311, 312) comportant des dents (3111) et capable d'entraîner la rotation de la roue d'entraînement (1), un cliquet (321, 322) capable d'être engrené avec les dents (3111), une plaque de traction (33) utilisée pour monter le cliquet (321, 322) et capable de servir d'objet suiveur de la roue à rochet (311, 312) quand le cliquet (321, 322) est engrené avec les dents (3111), une tige de pressage (34) pour convertir l'action de rotation du guidon (2) en une action de rotation de la plaque de traction (33) et un mécanisme de déclenchement (351-354) utilisé pour commander le cliquet (321, 322) à être séparé de ou à engrener avec la roue à rochet (311, 312), **caractérisé en ce que** le mécanisme de déclenchement (351-354) comprend un disque de positionnement (351) connecté de manière rotative avec la plaque de traction (33) par un arbre rotatif (3511), une tige de positionnement (352) capable de fixer le disque de positionnement (351) dans une position de rotation en cours, un bloc de pressage (353) capable de convertir une action de rotation de l'arbre rotatif (3511) en l'action de séparation ou d'engrènement entre le cliquet (321, 322) et la roue à rochet (311, 312), et une plaque à pédale (354) fixée de manière relative avec le disque de positionnement (351).

2. Véhicule industriel léger et compact selon la revendication 1, **caractérisé en ce que** le cliquet (321, 322) comprend une partie de connexion rotative (3211) connectée de manière rotative avec la plaque de traction (33) et une partie d'engrènement (3212) agissant sur la roue à rochet (311, 312) ; le bloc de pressage comprend une partie de déclenchement (35311) agissant sur la partie d'engrènement (3212) ; et un élément de connexion (355) est connecté entre la partie de déclenchement (35311) et la partie d'engrènement (3212).

3. Véhicule industriel léger et compact selon la revendication 1, **caractérisé en ce que** le cliquet (321, 322) comprend une partie de connexion rotative (3211) connectée de manière rotative avec la plaque de traction (33) et des parties d'engrènement (3212) situées respectivement de deux côtés de la partie de connexion rotative (3211) pour s'engrener avec la roue à rochet (311, 312).

4. Véhicule industriel léger et compact selon la revendication 3, **caractérisé en ce que** le mécanisme de déclenchement (351-354) comprend : le disque de positionnement (351) qui est connecté de manière rotative avec la plaque de traction (33) par l'arbre rotatif (3511) et comporte trois baïonnettes (3512), la tige de positionnement (352) qui est disposée sur la plaque de traction (33) et peut être verrouillée dans une baïonnette correspondante (3512) afin de fixer le disque de positionnement (351) dans la position de rotation en cours, le bloc de pressage qui est fixé de manière relative à l'arbre rotatif (3511) et comporte des parties de déclenchement (35311) capables d'agir respectivement sur des parties d'engrènement correspondantes (3212) du même cliquet (321, 322) de manière à engrener les parties d'engrènement correspondantes (3212) avec la roue à rochet (311, 312), et la plaque à pédale (354) fixée de manière relative au disque de positionnement (351).

5. Véhicule industriel léger et compact selon la revendication 4, **caractérisé en ce qu'**un élément de connexion (355) est connecté entre la partie de déclenchement respective (35311) et la partie d'engrènement (3212) correspondant à la partie de déclenchement (35311).

6. Véhicule industriel léger et compact selon la revendication 3, **caractérisé en ce que** les parties d'engrènement (3212) du même cliquet (321, 322) sont axialement décalées ; deux roues à rochet (311, 312) correspondent au même cliquet de rochet (321, 322) ; les deux roues à rochet (311, 312) sont axialement réparties côte à côte ; et les dents (3111) de l'une des deux roues à rochet (311, 312) sont orientées de manière inverse aux dents (3111) de l'autre.

7. Véhicule industriel léger et compact selon la revendication 3, **caractérisé en ce que** chaque partie d'engrènement (3212) est pourvue d'une extrémité rotative (32111) connectant en rotation la partie d'engrènement (3212) à la plaque de traction (33) ; et la partie de connexion rotative (3211) se compose des deux extrémités rotatives (32111) du même cliquet (321, 322).

8. Véhicule industriel léger et compact selon la revendication 1, **caractérisé en ce que** deux extrémités de la tige de pressage (34) sont connectées de manière rotative au guidon (2) et à la plaque de traction (33) respectivement.

9. Véhicule industriel léger et compact selon la revendication 1, **caractérisé en ce que** le véhicule industriel léger et compact comprend en outre un châssis (4), qui est pourvu d'un cylindre d'huile (41) et d'une pompe à huile (42) sur celui-ci ; le guidon (2) et le cylindre d'huile (41) sont disposés d'une manière relativement rotative, et le guidon (2) agit sur la pompe à huile (42) de manière à commander le déplacement d'un bouchon d'huile du cylindre d'huile (41) ; une tige de piston (411) du cylindre d'huile (41) est pourvue d'une plaque supérieure (81) au niveau de l'extrémité supérieure de celle-ci ; la plaque supérieure (81) est connectée de manière fixe à un cadre (8) connecté de manière flexible au châssis (4) ; le cadre (8) est pourvu de roues de support (82) sur la partie inférieure de celui-ci ; un axe de roue (11) fixé de manière relative sur le cylindre d'huile (41) est disposé sous le châssis (4) ; des roues d'entraînement (1) se situent de deux côtés de l'axe de roue (11) ; des roulements à billes (12) sont disposés entre les roues d'entraînement (1) et l'axe de roue (11) ; des côtés respectifs des deux roues d'entraînement (1) qui sont mutuellement tournés l'un vers l'autre sont pourvus de manière fixe de deux roues à rochet (311, 312) qui sont axialement répartis côte à côte avec les dents (3111) orientées de manière inverse ; les deux roues à rochet (311, 312) sont respectivement une première roue à rochet (311) et une seconde roue à rochet (312) ; l'axe de roue (11) est en outre manchonné avec deux plaques de traction (33) sur celui-ci ; l'arbre rotatif (3511) est connecté de manière rotative entre les deux plaques de traction (33) ; l'arbre rotatif (3511) est pourvu de manière fixe, sur lui, du disque de positionnement (351) comportant trois baïonnettes (3512) ; la tige de positionnement (352) qui peut être verrouillée dans une baïonnette correspondante (3512) est en outre disposée entre les deux plaques de traction (33) ; chacune des plaques de traction (33) est pourvue, sur elle, d'une encoche (331) utilisée pour monter la tige de positionnement (352) ; un élément élastique (3521) est fourni entre la tige de positionnement (352) et l'arbre rotatif (3511) et est utilisé de telle sorte que la tige de positionnement (352) est capable de se déplacer le long d'une direction perpendiculaire à la direction axiale de l'arbre rotatif (3511) lors d'un mouvement de va-et-vient entre différentes baïonnettes (3512) en raison d'une force résistante du disque de positionnement (351), de manière à verrouiller la tige de positionnement (352) dans la baïonnette correspondante (3512) ; un cliquet supérieur (321) et un cliquet inférieur (322) correspondant respectivement à la première roue à rochet (311) et à la seconde roue à rochet (312) sont connectés d'une manière rotative coaxiale sur chaque plaque de traction (33) ; chacun des cliquets supérieur et inférieur (321, 322) est pourvu d'une partie de connexion rotative (3211) connectée de manière rotative avec la plaque de traction et une partie d'engrènement (3212) utilisée pour s'engrener avec la roue à rochet correspondante (311, 312) ; deux extrémités de l'arbre rotatif (3511) sont chacune pourvues de manière fixe d'un bloc de pressage supérieur (3531) et d'un bloc de pressage inférieur (3532) correspondant respectivement au cliquet supérieur (321) ou au cliquet inférieur (322) ; chaque bloc de pressage comporte une partie de déclenchement (35311) agissant sur le cliquet correspondant (321, 322) ; un élément de connexion (355) est disposé entre une partie de déclenchement respective (35311) et une partie d'engrènement respective (3212) ; le disque de positionnement (351) est en outre pourvu de manière fixe de la plaque à pédale (354) sur celui-ci ce qui est pratique pour que l'opérateur fasse tourner le disque de positionnement (351) ; et deux extrémités de la tige de pressage (34) sont connectées de manière rotative au guidon (2) et à la plaque de traction (33) respectivement.
